# EUROPÄISCHE PATENTSCHRIFT

(11) **EP 3 066 372 B1**
(45) Veröffentlichungstag und Bekanntmachung des Hinweises auf die Patenterteilung: **20.02.2019**
(21) Anmeldenummer: 14795952.2
(22) Anmeldetag: 29.10.2014
(51) Int. Cl.: F16K 37/00, G01D 5/20

(54) **VENTILSTEUEREINRICHTUNG UND PROZESSVENTIL**
VALVE CONTROL DEVICE AND PROCESSING VALVE
DISPOSITIF DE COMMANDE DE SOUPAPE ET SOUPAPE DE PROCESSUS

(30) Priorität: 05.11.2013 DE 102013018564
(43) Veröffentlichungstag der Anmeldung: 14.09.2016
(73) Patentinhaber: GEA Tuchenhagen GmbH, 21514 Büchen (DE)
(72) Erfinder: PORATH, Bernd, 23881 Breitenfelde (DE); GESIKIEWICZ, Martin, 23562 Lübeck (DE); STENDER, Heiko, 23562 Lübeck (DE)
(74) Vertreter: Hauck Patentanwaltspartnerschaft mbB
(86) Internationale Anmeldenummer: PCT/EP2014/002897
(87) Internationale Veröffentlichungsnummer: WO 2015/067354

(56) Entgegenhaltungen:
- WO-A1-95/31696
- WO-A1-02/093058
- DE-T2- 69 810 504
- DE-U1-202014 102 940

## Beschreibung

Die Erfindung betrifft eine Ventilsteuereinrichtung für ein Prozessventil nach dem Oberbegriff des Anspruchs 1 und eine Anordnung nach dem Oberbegriff des Anspruchs 12. Prozessventile in den Prozessanlagen der Lebensmittel-, Getränke- und Pharmaindustrie sowie der feinchemischen Industrie und Biotechnologie sind in komplexe Anlagensteuerungen eingebunden. Hierfür ist eine Ventilsteuereinrichtung am Prozessventil angeordnet, die mit der Anlagensteuerung verbunden ist. Die Ventilsteuereinrichtung meldet die Stellung des Prozessventils an die Anlagensteuerung und ändert auf Signale hin die Ventilstellung, sobald es der Prozess erfordert.

Die Stellung des Prozessventils wurde in früheren Lösungen mit mechanischen Kontakten ermittelt. Mikroschalter und ein mit einem Schließelement verbundenes Bauteil des Ventils berührten sich. Das Bauteil war so gestaltet, dass die Schaltposition des Mikroschalters durch Verschiebung des Bauteils verändert wurde. Die Stellung des Schließelements konnte so bestimmt werden. Da diese Art der Stellungsermittlung verschleißanfällig war, wurden berührungslose Messverfahren entwickelt und erfolgreich in den Markt gebracht. Berührungslose Messverfahren sind für sich selbst praktisch verschleißfrei und besitzen den Vorteil, bei mechanischem Verschleiß von Ventilteilen, insbesondere der Dichtung zwischen Ventilteller und Ventilsitz, eine Kalibrierung durchführen zu können. Mit dieser wird beispielsweise die Schließstellung auch dann ermittelt, wenn diese aufgrund der Alterung der Dichtung in einer veränderten Stellung von Ventilteller und Ventilsitz zueinander erreicht wird. Solch ein Kalibrierverfahren ohne nähere Erläuterung des berührungslosen Messprinzips ist beispielsweise in der WO 95/17624 A1 beschrieben.

Die WO 02/093058 A1 stellt sowohl ein Kalibrierverfahren als auch die Vorrichtung zur berührungsloses Messung der Ventilstellung vor. Zur Positionsmessung werden mehrere Hallsensoren verwendet, die entlang der Bewegungsrichtung eines mit einer den Ventilteller bewegenden Ventilstange verbundenen Permanentmagneten angeordnet ist.

Eine wiederum andere Anordnung zur berührungslosen Messung in einem Prozessventil erläutert die DE 10 2007 058 253 A1. Ein Permanentmagnet ist an der Ventilstange angebracht und wirkt mit einem magnetostriktiven Sensor zusammen.

WO 95/31696 A1 beschreibt einen linearen Positionsgeber, umfassend mehrere helixartig entlang eines Trägerelements angeordnete Windungen und einen relativ zu dem Trägerelement beweglichen Resonanzkreis mit einer Spule und einem Kondensator. Wird der Resonanzkreis angeregt, erzeugt er in den Windungen des Trägerelements Ströme, die abhängig von der relativen Position des Resonanzkreises zu dem Trägerelement sind.

DE 698 10 504 T2 beschreibt Drehpositionsgeber mit einem ersten Element, welches Erregerwicklungen und Sensorwicklungen umfasst, wobei über in den Sensorwicklungen induzierte Signale die Position eines einen Resonator umfassenden zweiten Elements bestimmt werden kann.

Die im Stand der Technik bekannten berührungslosen Messprinzipien, insbesondere auf Basis von Hallsensoren, sind seit Jahren erfolgreich am Markt im Einsatz. Die hierfür zwingend notwendige, sehr hohe Zuverlässigkeit bedingt jedoch eine aufwändige Konstruktion, woraus hohe Kosten für die Ventilsteuerungen entstehen.

Es ist daher Aufgabe der Erfindung, eine Ventilsteuereinrichtung für ein Prozessventil vorzustellen, die mit einem kostengünstigen Aufbau eine hohe Zuverlässigkeit erreicht.

Diese Aufgabe wird gelöst durch eine Ventilsteuereinrichtung für ein Prozessventil mit den Merkmalen des Anspruchs 1 und eine Anordnung mit den Merkmalen des Anspruchs 12. Die abhängigen Ansprüche 2 bis 11 sowie 13 und 14 geben vorteilhafte Weiterbildungen der Ventilsteuereinrichtung und der Anordnung an.

Eine Ventilsteuereinrichtung, die für das Zusammenwirken mit einem Prozessventil eingerichtet ist, umfasst eine Steuerelektronik zur Ansteuerung eines Antriebes und ein Messsystem zur Bestimmung der Lage eines sich innerhalb der Ventilsteuereinrichtung befindenden und darin entlang einer geradlinigen Bewegungsrichtung beweglichen Elements.

Das Messsystem einer Ventilsteuereinrichtung für ein Prozessventil umfasst eine Sendeanordnung zum Aussenden einer elektromagnetischen Anregungswelle, einen an einem beweglichen Element befestigten Resonator, in welchem von der Anregungswelle eine resonante elektrische Schwingung erzeugt wird, eine Empfangsanordnung, in welcher eine durch die resonante elektrische Schwingung erzeugte elektromagnetische Resonanzwelle ein Signal erzeugt, und eine mit Sendeanordnung und Empfangsanordnung verbundene Messelektronik, welche zur Erzeugung der Anregungswelle in der Sendeanordnung und zur Bestimmung der Lage des beweglichen Elements relativ zur Empfangsanordnung aus dem Signal der Empfangsanordnung eingerichtet ist. Hierdurch werden Bauteile vermieden, die gegen Erschütterungen und Temperatureinwirkungen kostenintensiv zu schützen sind, oder in sich zwar eine hohe Zuverlässigkeit besitzen, aber zunehmend teuer sind, beispielsweise Permanentmagnete. Stattdessen sind die Bauteile des Messsystems robust und kostengünstig zugleich, so dass kostengünstig eine hohe Zuverlässigkeit erreicht wird. Die Verwendung eines Prinzips mit Anregungswelle und Resonanzwelle sorgt zudem für eine saubere Trennung von Nutzsignalen und eingestreuten Störsignalen. Dies erhöht die Zuverlässigkeit der Messung. Die Erfindung sieht vor, dass der Resonator derart gestaltet und angeordnet ist, dass die elektromagnetische Resonanzwelle rotationssymmetrisch zu einer Längsachse und die Längsachse an der Bewegungsrichtung ausgerichtet sind. Dies erhöht die Zuverlässigkeit, da eine genaue Stellungsmessung auch dann möglich wird, wenn sich der Resonator um seine Längsachse dreht.

In einer Weiterbildung sind Sendeanordnung und Empfangsanordnung eben gestaltet und einen Messweg abdeckend an der Bewegungsrichtung ausgerichtet. Dies gelingt mit einer kostengünstigen und technisch einfachen Herstellung, beispielsweise als eine gedruckte, mehrlagige Schaltung. Dies wirkt sich wiederum vorteilhaft auf Zuverlässigkeit und Kosten aus.

Eine andere Weiterbildung zur Steigerung der bereits genannten Vorteile schlägt vor, dass eine erste elektrische Verbindung und eine zweite elektrische Verbindung zwischen Steuerelektronik und Messelektronik vorgesehen sind. Damit der schaltungstechnische Aufwand verringert und eine für die Herstellung kostengünstige Schnittstelle zwischen den Schaltungsteilen erreicht werden, sind die erste elektrische Verbindung zur Versorgung der Messelektronik mit einer Betriebsspannung und die zweite elektrische Verbindung zur Übermittelung eines Stellungssignals eingerichtet. Beispielsweise ist ein Kabel mit lediglich drei Adern ausreichend, um erste und zweite elektrische Verbindung zu schaffen.

Die Bauteilkosten sind besonders niedrig und die Zuverlässigkeit besonders hoch, wenn gemäß einer nächsten Weiterbildung die Sendeanordnung eine elektrische Sendespule und die Empfangsanordnung eine elektrische Empfangsspule umfasst.

Die vorgenannte Weiterbildung kann ihrerseits weitergebildet werden, indem das in der Empfangsspule durch die Resonanzwelle erzeugte Signal eine Induktionsspannung ist, deren Größe von der Lage des beweglichen Elements abhängig ist. Dies ist eine besonders einfach handzuhabende Messgröße, wodurch der Schaltungsaufwand gering ist, wodurch Zuverlässigkeit und Kostenvorteile verstärkt werden.

Eine höhere Genauigkeit der Messung wird erreicht, wenn die Empfangsanordnung eine erste Empfangsspule und eine zweite Empfangsspule umfasst.

Eine Weiterbildung dieses Gedankens ist es, dass die Empfangsspulen so angeordnet sind, dass die Signale in erster und zweiter Empfangsspule phasenversetzt zueinander sind. Die Genauigkeit der Messung wird nochmals erhöht.

Die mechanische Zuverlässigkeit wird erhöht, indem gemäß Weiterbildung Sendeanordnung und Empfangsanordnung in einem Messsystemgehäuse angeordnet sind.

Der Aufbau der Ventilsteuereinrichtung wird vereinfacht, indem die Steuerelektronik mechanisch mit dem Messsystemgehäuse verbunden ist.

Eine aufgrund kurzer Signalwege für das Messsignal zwischen Empfangsanordnung und notwendiger Verarbeitungselektronik die Zuverlässigkeit erhöhende Weiterbildung sieht vor, dass die Messelektronik in dem Messsystemgehäuse angeordnet ist.

Ein einfacher und robuster Aufbau des Resonators ergibt sich, wenn gemäß Weiterbildung der Resonator einen elektrischen Schwingkreis umfasst.

Ein zuverlässiger Aufbau des Resonators, der durch den Rotationsfreiheitsgrad die Zuverlässigkeit der Messung erhöht, sieht gemäß Weiterbildung vor, dass der Resonator einen Schwingkreis mit einer Resonanzspule umfasst, welche derart gestaltet und angeordnet ist, dass die elektromagnetische Resonanzwelle rotationssymmetrisch zu einer Längsachse und die Längsachse an der Bewegungsrichtung ausgerichtet ist.

Die Zuverlässigkeit wird durch erhöhte Robustheit verbessert, wenn gemäß Weiterbildung die Resonanzspule fluiddicht in einer Kapselung eingeschlossen ist, und die Kapselung eine zentrale Durchgangsöffnung besitzt.

Eine vorteilhafte Gasführung innerhalb der Ventilsteuereinrichtung ist erreicht, wenn die Durchgangsöffnung mit einem Druckmittelkanal zur Versorgung eines Antriebes mit einem Druckmittel zusammenwirkend angeordnet ist.

Die Führung des Druckmittels einerseits und die Robustheit andererseits werden verbessert, indem gemäß Weiterbildung das bewegliche Element in einem becherförmigen Gehäuse angeordnet ist, welches zu einem mit dem Antrieb verbindbaren Kupplungsflansch der Ventilsteuereinrichtung hin geöffnet ist.

Ein raumsparender Aufbau der Komponenten der Ventilsteuereinrichtung wird erzielt, wenn die Steuerelektronik mit einem Boden des becherförmigen Gehäuses mechanisch verbunden ist.

Gemäß einer Weiterbildung der Ventilsteuereinrichtung ist die Steuerelektronik mit wenigstens einem Steuerventil wirkverbunden. Hierdurch kann eine einfache Ansteuerung eines Antriebes erreicht werden.

Eine besonders günstige Führung des Druckmittels wird erreicht, wenn gemäß einer weiteren Weiterbildung das Steuerventil mit einem Durchlass verbunden ist, durch welchen ein Druckmittel in das becherförmige Gehäuse einlassbar ist.

Die Ventilsteuereinrichtung für ein Prozessventil kann weitergebildet werden, indem die Steuerelektronik ein Leuchtmittel umfasst, welches mit einem transparenten Gehäuseabschnitt der Ventilsteuereinrichtung als visuelles Anzeigemittel zusammenwirkt. Die Steuerelektronik wirkt auf diese Weise in Vereinfachung des Aufbaus selbst als tragendes Bauteil für das Leuchtmittel, welches die Anzeige der Ventilstellung unabhängig von anderen Hilfsmitteln erlaubt.

Eine andere Weiterbildung sieht vor, dass die Steuerelektronik Speichermittel zur Speicherung von Ventilparametern umfasst. Auf diese Weise können Daten, die während des Betriebes ermittelt wurden, in der Ventilsteuereinrichtung gespeichert werden. Sie stehen zur Verfügung, um Änderungen zu ermitteln und gegebenenfalls zu berücksichtigen oder zu melden. Solche Änderungen können sich aus Verunreinigungen, Verschleiß oder anderweitig verursachten Abweichungen vom Normalbetrieb des Prozessventils ergeben und einen auf die Ventilstellung Einfluss besitzen.

Die Ansteuerung des Prozessventils mittels einer Prozessanlagensteuerung setzt eine Kommunikationsschaltung in der Ventilsteuereinrichtung voraus. Um die Anzahl der Baugruppen innerhalb der Ventilsteuereinrichtung klein zu halten, ist es vorteilhaft, wenn die Steuerelektronik eine Kommunikationsschaltung umfasst.

Die Erfindung stellt außerdem eine Anordnung mit einem Prozessventil, insbesondere der lebensmitteltechnischen oder pharmazeutischen Industrie sowie der Biotechnologie, nach Anspruch 12 vor. Das Zusammenwirken mit einer Ventilsteuereinrichtung nach einem der Ansprüche 1 bis 11 schafft ein Prozessventil, das unter Prozessbedingungen, beispielsweise hohen Temperaturen und verschleißfördernden Medien aufgrund der zuverlässigen Messung der Ventilstellung sicher arbeitet.

Eine in Bezug auf Herstellkosten und Zuverlässigkeit günstige Anordnung der Komponenten des Prozessventils zueinander ist gemäß einer Weiterbildung gegeben, wenn der Antrieb zwischen Prozessventil und Ventilsteuereinrichtung angeordnet und eine Antriebsstange vorgesehen ist, welche den Antrieb durchsetzt und mit dem Absperrorgan und dem beweglichen Element verbunden ist.

Nach einer Weiterbildung des Prozessventils ist vorgesehen, dass die Antriebsstange einen Druckmittelkanal umfasst, welcher an einem dem beweglichen Element zugewandten Stangenende beginnt und innerhalb des Antriebes endet. Dies schafft einen kompakten Aufbau, bei dem ein kritisches Bauteil innerhalb der Ventilkomponenten angeordnet ist und so die Sicherheit erhöht ist.

Anhand eines Ausführungsbeispiels und seiner Weiterbildungen sollen die Erfindung näher erläutert und die Darstellung der Wirkungen und Vorteile vertieft werden.

Es zeigen:
- Fig. 1:: Schematische Darstellung eines Prozessventils mit einer Ventilsteuereinrichtung;
- Fig. 2:: Schnitt durch eine schematisch dargestellte Ventilsteuereinrichtung gemäß Figur 1;
- Fig. 3:: Schematische Darstellung des Messsystems, des beweglichen Elements und der elektronischen Bestandteile der Ventilsteuereinrichtung gemäß den Figuren 1 und 2;
- Fig. 4:: Schnitt durch den am beweglichen Element angeordneten Resonator mit Darstellung des magnetischen Feldanteils der Resonanzwelle.

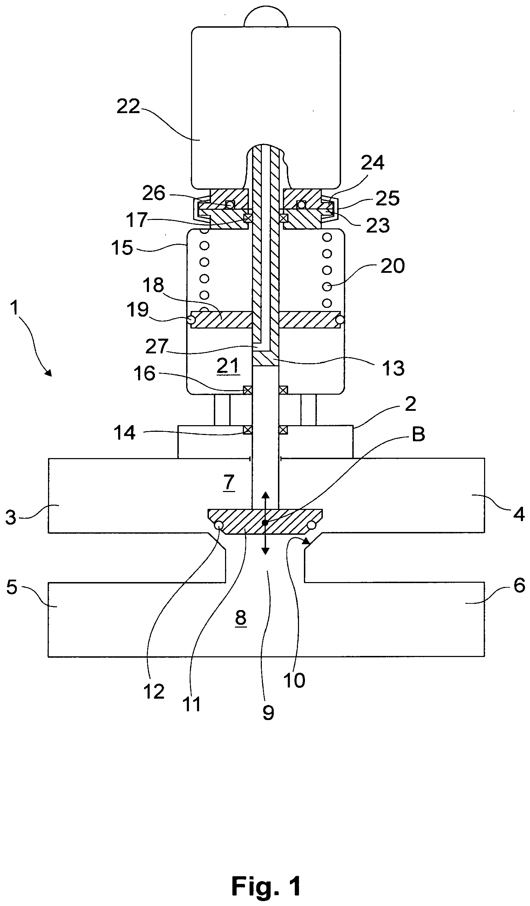

In **Fig. 1** ist in einer schematischen, teilweise geschnittenen Darstellung ein Prozessventil 1 gezeigt, welches für die lebensmitteltechnische, Getränke-, feinchemische und pharmazeutische Industrie sowie die Biotechnologie geeignet ist. Das Prozessventil 1 besitzt ein Ventilgehäuse 2, welches beispielsweise einen ersten, zweiten, dritten und vierten Anschluss 3, 4, 5 und 6 aufweist. Erster und zweiter Anschluss 3 und 4 schaffen eine Fluidverbindung zu einer ersten Kammer 7 des Prozessventils 1, dritter und vierter Anschluss 5 und 6 entsprechend eine Fluidverbindung zu einer zweiten Kammer 8. Jeder der Anschlüsse ist mit einer Rohrleitung einer Prozessanlage verbindbar. Innerhalb des Ventilgehäuses 2 ist zwischen erster und zweiter Kammer 7 und 8 eine Durchtrittsöffnung 9 vorgesehen, welche von einem Ventilsitz 10 umgeben ist. Ein Absperrorgan 11 ist so angeordnet, dass es mit dem Ventilsitz 10 in dichtenden Kontakt bringbar ist, um die durch die Durchtrittsöffnung 9 gebildete Verbindung von erster zu zweiter Kammer 7 und 8 zu unterbrechen und auf diese Weise eine Schließstellung des Prozessventils 1 zu schaffen. Weiterhin ist das Absperrorgan 11 so angeordnet, dass der Kontakt gelöst werden kann, um die Verbindung von erster zu zweiter Kammer 7 und 8 freizugeben. Je nach geforderter Dichtwirkung kann an dem Absperrorgan 11 eine Absperrdichtung 12 vorgesehen sein, welche mit dem Ventilsitz 10 in der Schließstellung dichtend zusammenwirkt.

Mit dem Absperrorgan 11 ist beispielsweise eine einteilige oder mehrteilige Antriebsstange 13 verbunden. Eine Durchführung 14 dichtet den Durchtritt ab, an welchem die Antriebsstange 13 das Ventilgehäuse 2 durchsetzt. Die Antriebsstange 13 durchsetzt einen Antrieb 15 und ist an ihrer Eintrittsstelle und Austrittsstelle mittels einer unteren und einer oberen Antriebsdichtung 16 und 17 abgedichtet.

Innerhalb des Antriebs 15 ist ein Kolben 18 mit der Antriebsstange 13 verbunden. Mittels einer Kolbendichtung 19 ist der Kolben 18 gegen das Gehäuse des Antriebs 15 abgedichtet. Eine Feder 20 bewirkt die Bewegung des Kolbens 18 entlang der Bewegungsrichtung B in einer ersten Richtung. Ein Druckmittel in einem Druckraum 21 wirkt gegen die Kraft der Feder 20 und bewirkt die Bewegung des Kolbens 18 entlang der Bewegungsrichtung B entgegengesetzt der ersten Richtung. Mit der Bewegung des Kolbens 18 erfolgt eine Bewegung der Antriebsstange 13 und damit auch des Absperrorgans 11. Der Kontakt zwischen Ventilsitz 10 und Absperrorgan 11 kann entsprechend geschaffen oder aufgehoben werden. Ist der Kontakt aufgehoben, ist die Offenstellung des Ventils erreicht, in welcher eine Fluidverbindung zwischen erster Kammer 7 und zweiter Kammer 8 besteht.

Auf der dem Ventilgehäuse 2 abgewandten Seite des Antriebs 15 ist eine Ventilsteuereinrichtung 22 angeordnet und mit dem Antrieb 15 lösbar verbunden. Um diese Verbindung zu schaffen, weist der Antrieb 15 einen Antriebsflansch 23 auf. Die Ventilsteuereinrichtung 22 ihrerseits besitzt eine Kupplungsflansch 24, welcher mit dem Antriebsflansch 23 mittels einer Klemme 25 oder einem anderen geeigneten Verbindungsmittel verbunden ist. Die Flanschverbindung ist druckmitteldicht ausgeführt. Hierzu ist eine Flanschdichtung 26 am Kupplungsflansch 24 vorgesehen. Alternativ ist die Flanschdichtung 26 am Antriebsflansch 23 oder sowohl in Antriebsflansch 23 und Kupplungsflansch 24 gleichsam eingreifend angeordnet.

Die Antriebsstange 13 besitzt beispielsweise und vorteilhaft einen Druckmittelkanal 27, dessen Hauptabschnitt beispielsweise in Form einer Bohrung entlang ihrer Achse ausgeführt ist. Dieser Druckmittelkanal 27 verbindet die Ventilsteuereinrichtung 22 mit dem Druckraum 21, so dass Druckmittel von der Ventilsteuereinrichtung 22 in den Antrieb 15 gelangt und dessen Stellungsänderung bewirkt. Dies erspart außenliegende Druckmittelführungen, die eine Fehlerquelle darstellen, beispielsweise durch Aufbrechen von brüchigen Leitungen.

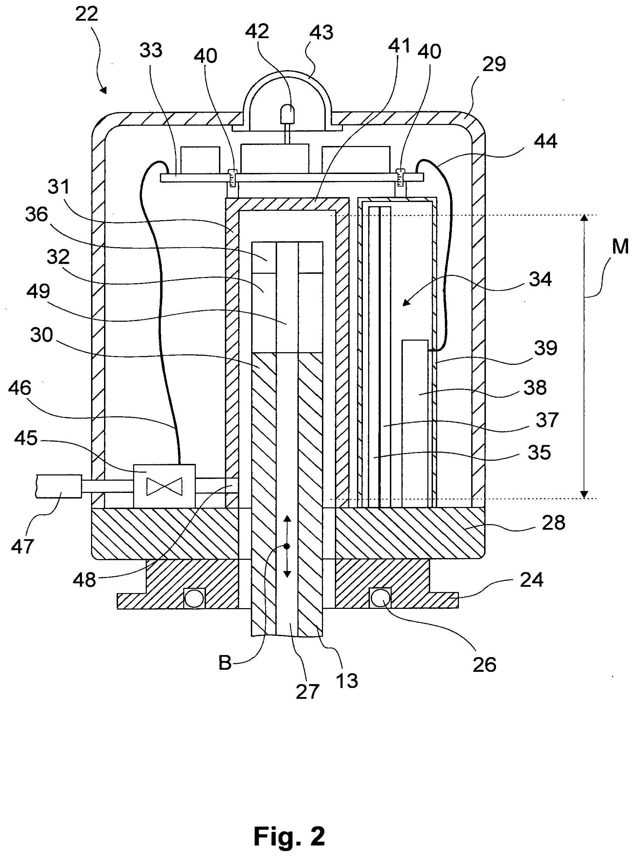

In **Fig. 2** ist ein Schnitt durch die Ventilsteuereinrichtung 22 mit schematisch dargestellten Elektronikkomponenten gezeigt. Die Ventilsteuereinrichtung 22 besitzt eine Basis 28, an welcher der Kupplungsflansch 24 befestigt ist, mit welchem die Ventilsteuereinrichtung 22 mit dem Antrieb 15 mit Hilfe der Flanschdichtung 26 abgedichtet verbindbar ist. Eine Haube 29 ist mit der Basis 28 lösbar verbunden und deckt die Funktionsbauteile der Ventilsteuereinrichtung 22 ab, beispielsweise die Elektronikkomponenten.

Das Stangenende 30 der Antriebsstange 13 durchsetzt das Zentrum des Kupplungsflansches 24 und ragt in das Innere eines becherförmigen Gehäuses 31. Dieses ist an der Basis 28 befestigt und dort vorzugsweise abgedichtet. Am Stangenende 30 ist ein bewegliches Element 32 befestigt, welches bezogen auf das Stangenende 30 ortsfest und bezogen auf das becherförmige Gehäuse 31 beweglich ist. Zwar kann das bewegliche Element 32 einstückig mit der Antriebsstange 13 ausgeführt sein, jedoch ist für die Herstellung die Teilung vorteilhaft, da auf diese Weise das bewegliche Element 32 mit den unterschiedlichen Antriebsstangen 13 verschiedener Ventiltypen kombinierbar ist.

Die Ventilsteuereinrichtung 22 besitzt in ihrem Inneren eine Steuerelektronik 33, mit der der Antrieb 15 zur Bestimmung und Veränderung der Ventilstellung angesteuert wird. Sie besitzt zudem ein Messsystem 34 zur Bestimmung der Ventilstellung.

Das Messsystem 34 umfasst eine Sendeanordnung 35, mit dem eine elektromagnetische Anregungswelle ausgesendet wird, welche kontinuierlich, moduliert oder gepulst sein kann. Diese Anregungswelle erzeugt eine resonante Schwingung in einem Resonator 36, welcher am beweglichen Element 32 vorgesehen ist. Diese resonante Schwingung erzeugt ihrerseits eine elektromagnetische Resonanzwelle R, welche vom Resonator 36 ausgesendet und mittels einer Empfangsanordnung 37 empfangen wird.

Der Antrieb 15 bewirkt eine Bewegung des beweglichen Elements 32 entlang der geradlinigen Bewegungsrichtung B. Die Gestaltung von Antrieb 15 und Prozessventil 1 legen dem Hub des Prozessventils fest, womit ein notwendiger Messweg M ebenfalls festgelegt ist, entlang welchem sich der Resonator 36 bewegen kann. Sendeanordnung 35 und Empfangsanordnung 37 sind so gestaltet, dass mit ihrer Hilfe die Position des Resonators 36 in Bezug zu dem Messweg M ermittelbar ist.

Eine Messelektronik 38 ist derart gestaltet, dass sie das notwendige elektrische Signal erzeugt, mit welchem die Sendeanordnung 35 betrieben wird. Die Messelektronik 38 ist ferner so gestaltet, dass sie die durch die elektromagnetische Resonanzwelle R in der Empfangsanordnung 37 erzeugten Ströme und Spannungen zu einem Stellungssignal verarbeitet und ein Signal erzeugt, welches ein Maß für die Lage des Resonators 36 bezüglich der Empfangsanordnung 37 ist.

Das Messsystem 34 mit Sendeanordnung 35, Empfangsanordnung 37 und Messelektronik 38 umfasst ein Messsystemgehäuse 39, mit welchem vorteilhaft ein Modul geschaffen ist, welches die Positionierung des Messsystems 34 innerhalb der Ventilsteuereinrichtung 22 einerseits und dessen Montage andererseits wesentlich vereinfacht.

Eine besonders kompakte Bauform ist erreicht, da die Steuerelektronik 33 mit Schrauben 40 oder einem anderen Befestigungsmittel am Boden 41 des becherförmigen Gehäuses 31 und am Messsystemgehäuse 39 befestigt ist. Dieser Aufbau ermöglicht zudem, ein Leuchtmittel 42 auf der Steuerelektronik 33 anzuordnen, welches mit einem transparenten Gehäuseabschnitt 43 zusammenwirkt. Dieser ist beispielsweise kuppelförmig ausgeführt, so dass das vom Leuchtmittel 42 ausgesendete Signallicht in einem großen Raumwinkel sichtbar ist.

Steuerelektronik 33 und Messelektronik 38 sind mittels einer Messverbindung 44 elektrisch verbunden. Die Messverbindung 44 dient insbesondere zur Übertragung des die Lage des beweglichen Elements 32 in Bezug zur Empfangsanordnung 37 repräsentierenden Signals.

Innerhalb der Ventilsteuereinrichtung 22 ist ein Steuerventil 45 angeordnet. Der geöffnete oder geschlossene Schaltzustand dieses Steuerventils 45 wird durch die Steuerelektronik 33 mittels einer Schaltverbindung 46 gesetzt.

Das Steuerventil 45 ist einerseits mit einer Druckmittelversorgung 47 verbunden, andererseits mit einem Durchlass 48 im becherförmigen Gehäuse 31. Bei geöffnetem Steuerventil 45 strömt Druckmittel aus der Druckmittelversorgung durch das Steuerventil 45 und den Durchlass 48 in das becherförmige Gehäuse 31. Eine Durchgangsöffnung 49 durchsetzt bewegliches Element 32 und Resonator 36 und schafft eine Fluidverbindung zwischen dem Innenraum des becherförmigen Gehäuses 31 und dem Druckmittelkanal 27. In geöffneter Stellung des Steuerventils 45 strömt Druckmittel in den Druckmittelkanal 27 ein, der im Druckraum 21 des Antriebes 15 endet. Das Druckmittel bewirkt eine Verschiebung des Kolbens 18 gegen die Kraft der Feder 20 und insgesamt eine Bewegung des Absperrorgans 11 vom Ventilsitz 10 weg, so dass das Prozessventil 1 in Offenstellung gelangt, in der eine Fluidverbindung zwischen erster Kammer 7 und zweiter Kammer 8 besteht.

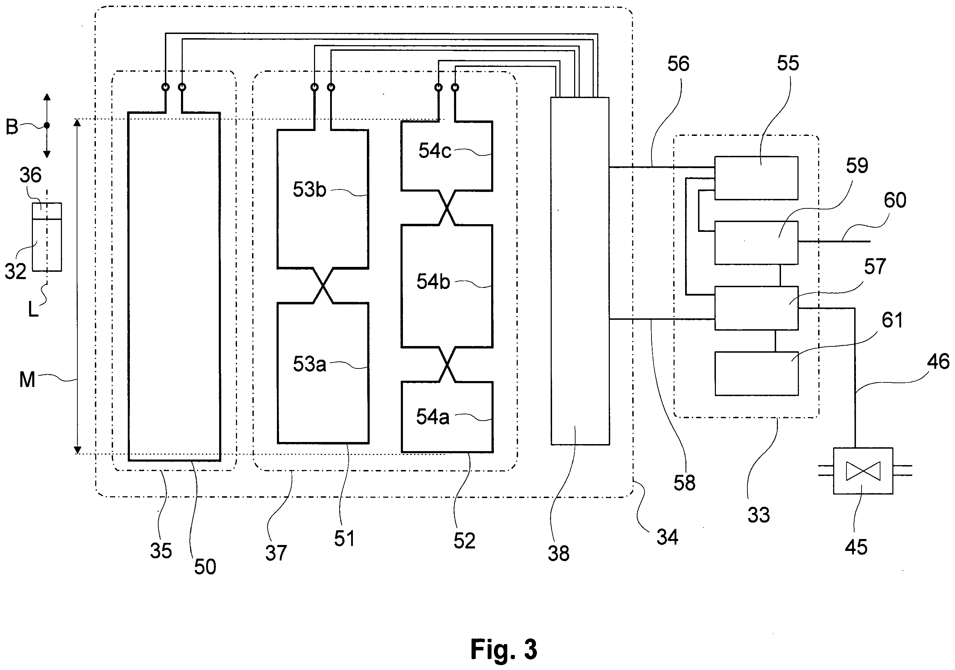

Anhand der schematischen Darstellung in **Fig. 3** soll der funktionelle Aufbau der Sendeanordnung 35, der Empfangsanordnung 37 und der Steuerelektronik 33 näher erläutert werden.

Die Sendeanordnung 35 umfasst eine ebene Sendespule 50, welche sich über die Länge des Messweges M erstreckt. Die Sendespule 50 kann eine oder mehrere Leiterschleifen umfassen, welche vorteilhaft als Leiterbahnen auf einer gedruckten Schaltungsplatine ausgeführt sein können.

Die Empfangsanordnung 37 umfasst eine erste Empfangsspule 51 und eine zweite Empfangsspule 52. Beide Empfangsspulen 51 und 52 sind eben und vorteilhaft als Leiterbahnen auf einer gedruckten Schaltungsplatine ausgeführt. Erste Empfangsspule 51 und zweite Empfangsspule 52 sind so bemessen, dass sich die Empfangsanordnung 37 über den Messweg M erstreckt.

Die Spulen 50, 51 und 52 können Teil einer gemeinsamen, mehrlagigen gedruckten Schaltung sein. Dies erlaubt eine sehr günstige Herstellung und bewirkt zugleich eine erschütterungsfeste Orientierung der Spulen 50, 51 und 52 zueinander. Dies erhöht die Zuverlässigkeit des Messsystems 34. Besonders kompakt ist die Anordnung, wenn die Spulen 50, 51 und 52 übereinanderliegen, beispielsweise in einem Schichtaufbau gemäß der DE 69 810 504 T2.

Erste Empfangsspule 51 und zweite Empfangsspule 52 sind elektronisch phasenversetzt zueinander. Dies ist in der **Fig. 3** bewirkt und veranschaulicht durch Leiterschleifen. Die erste Empfangsspule 51 umfasst zwei Leiterschleifen 53a und 53b, die beide eine gleiche Ausdehnung in Bewegungsrichtung B besitzen und entlang der Bewegungsrichtung B in Reihe hintereinander liegen. Die zweite Empfangsspule 52 besitzt drei Leiterschleifen entlang der Bewegungsrichtung B. Eine mittlere Leiterschleife 54b besitzt eine größere Ausdehnung als die beiden äußeren Leiterschleifen 54a und 54c, wobei die Ausdehnungen dieser beiden Leiterschleifen 54a und 54c gleich sind. Diese Gestaltung von erster Empfangsspule 51 und zweiter Empfangsspule 52 bewirkt für eine gegebene Position des Resonators 36, dass die von der Resonanzwelle R in den Leiterschleifen 53a und 53b bzw. 54a, 54b und 54c erzeugte Induktion in den Empfangsspulen 51 und 52 unterschiedlich groß ist. Hieraus lässt sich bei Messung der Induktionsstärke beispielsweise durch Verhältnisbildung der Induktionsstärken die Stellung des Resonators 36 ableiten.

Anzahl der Leiterschleifen 53a, 53b, 54a, 54b und 54c, Formgebung und Windungszahl hängen von der verfügbaren Signalstärke der Resonanzwelle R und der gewünschten Ortsauflösung ab und variieren entsprechend gegenüber dem gezeigten Beispiel. Weitere Gestaltungsgesichtspunkte der Spulen 50, 51 und 52 ergeben sich aus der DE 69 502 283 T2.

Die Empfangsspulen 51 und 52 sind mit der Messelektronik 38 verbunden, so dass die jeweils darin induzierten Spannungen den elektronischen Schaltkreisen der Messelektronik 38 zur Weiterverarbeitung zur Verfügung stehen, beispielsweise der genannten Verhältnisbildung. Ein Schaltkreis der Messelektronik 38 ist zur Bestromung der Sendespule 50 mit dieser verbunden.

Die Steuerelektronik 33 umfasst eine Versorgungsschaltung 55. Diese erzeugt die zum Betrieb der Komponenten der Steuerelektronik 33 und Messelektronik 38 notwendigen Spannungen und Ströme. Die Messelektronik 38 ist mit der Versorgungsschaltung mittels einer ersten elektrischen Verbindung 56 verbunden.

Eine Steuerschaltung 57 der Steuerelektronik 33 ist durch eine zweite elektrische Verbindung 58 mit der Messelektronik verbunden. Über diese Verbindung wird ein Signal übertragen, das die Stellung des Resonators 36 und damit des Absperrorgans 11 repräsentiert. Dies kann ein digitaler Wert oder eine Analogspannung sein.

Eine Kommunikationsschaltung 59 ist in der Steuerelektronik 33 vorgesehen. Diese Kommunikationsschaltung 59 dient dazu, mittels einer Kommunikationsverbindung 60 mit einem externen Gerät, beispielsweise einer Prozessanlagensteuerung Steuerbefehle und Stellungssignale auszutauschen. Dieser Austausch umfasst die Rückmeldung der Ventilstellung an die Prozessanlagensteuerung und das Kommando, das Prozessventil 1 zu öffnen oder zu schließen. Ein solches Kommando wird von der Steuerschaltung 57 in eine notwendige Bestromung des Steuerventils 45 umgesetzt, mit der die Steuerschaltung 57 über die Schaltverbindung 46 verbunden ist.

In der Steuerelektronik 33 ist ein Speichermittel 61 vorgesehen, welches mit der Steuerschaltung 57 verbunden ist, so dass dort Stellungswerte abgelegt werden können, beispielsweise Positionswerte des Absperrorgans 11 bei Offenstellung und Schließstellung des Prozessventils 1. Dieses Speichermittel 61 kann für die Verfahren nach der WO 2002/093058 A1 verwendet werden.

Erste und zweite elektrische Verbindung 56 und 58 bilden vorteilhaft zusammen die Messverbindung 44 und sind als dreiadriges oder vieradriges Kabel ausgeführt. Hierdurch wird eine besonders einfache Anordnung aus Steuerelektronik 33 und Messsystem 34 erreicht, die aufgrund der wenigen Kontakte und Kabel sehr fehlersicher montierbar ist.

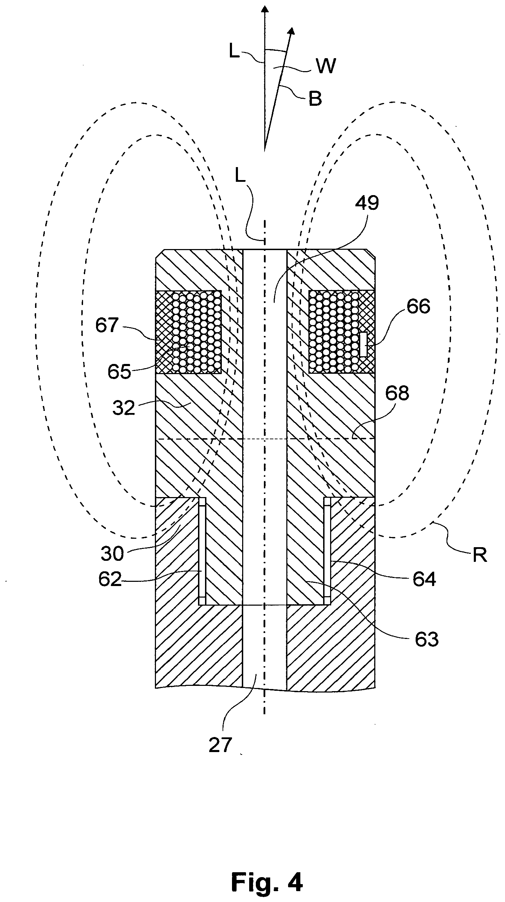

Eine Ausführung des Resonators 36 ist in **Fig. 4** im Schnitt dargestellt. Das bewegliche Element 32 ist am Stangenende 30 der Antriebsstange 13 oder eines mit dieser verbundenen Teils befestigt. Stangenende 30 und bewegliches Element 32 sind gemäß diesem Beispiel so geformt, dass sie eine Schraubverbindung 62 bilden. Hierzu ist ein zylindrischer Fortsatz 63 mit Außengewinde in einer mit Innengewinde versehenen Ausnehmung 64 aufgenommen. Gemäß Beispiel ist der zylindrische Fortsatz 63 am beweglichen Element 32 angeordnet während die Ausnehmung 64 am Stangenende 30 vorgesehen ist. Eine gespiegelte Anordnung ist ebenfalls möglich, in der Ausnehmung 64 am beweglichen Element 32 und der zylindrischer Fortsatz 63 am Stangenende 30 angeordnet sind. Gegenüber anderen ebenfalls möglichen kraft-, form- oder stoffschlüssigen Verbindungen von Stangenende 30 und beweglichem Element 32 ist die Schraubverbindung besonders leicht montierbar. Neben der Schraubverbindung kann eine zusätzliche Verbindung 68 geschaffen sein, durch die zwei Teile des beweglichen Elements miteinander verbunden sind. Diese ist vorzugsweise schwer lösbar ausgeführt und kann auf Kraft- oder Formschluss beruhen. Schwer lösbar bedeutet in diesem Zusammenhang, dass sie einerseits demontierbar ist aber andererseits nicht während des Betriebes des Prozessventils gelöst wird. Eine solche zusätzliche Verbindung 68 erlaubt es, mit wenigen Bauteilen ein an viele unterschiedliche Ventiltypen anpassbares bewegliches Element 32 zu schaffen.

Der Resonator 36 ist als elektrischer Schwingkreis ausgeführt und umfasst eine elektrische Spule 65. Die Windungen der elektrischen Spule 65 sind um eine Längsachse L des beweglichen Elementes 32 herum gewickelt. Insbesondere ist die elektrische Spule 65 so gewickelt, dass sich die Resonanzwelle R ergibt, die rotationssymmetrisch zur Längsachse L ist. Eine Drehung des beweglichen Elements 32 um seine Längsachse L führt daher nicht zu einer messbaren Änderung des Signales in der Empfangsanordnung 37. Hierdurch wird die Zuverlässigkeit der Messung und damit des gesamten Prozessventils 1 erhöht, da sich eine im Betrieb des Prozessventils 1 entstehende Verdrehung nicht in der Messung auswirkt. Solch eine Verdrehung kann beispielsweise durch auf das Absperrorgan 11 vom geförderten Fluid einwirkende Kräfte oder durch Torsionsmomente der Feder 20 auf den Kolben 18 in das bewegliche Element 32 eingeleitet werden. Zur Veranschaulichung der Symmetrie der Resonanzwelle R ist in **Fig. 4** die Magnetfeldkomponente als gestrichelte Linie schematisch angedeutet.

Der Schwingkreis umfasst zusätzlich zur elektrischen Spule 65 einen Kondensator 66. Vorzugsweise sind die elektrische Spule 65 und der Kondensator 66 zum Schutz vor beispielsweise im Druckmittel enthaltenen korrosiven Bestandteilen durch eine Kapselung geschützt. Diese kann vorteilhaft kostengünstig und mechanisch stabil als Verguss 67 ausgeführt sein.

Das bewegliche Element 32 weist zentral eine Durchgangsöffnung 49 auf, welche die elektrische Spule 65 und die Kapselung ebenfalls zentral durchsetzt. Die Durchgangsöffnung 49 steht in Fluidverbindung mit dem Druckmittelkanal 27, der im zylindrischen Fortsatz 63 des Stangenendes 30 endet, und wirkt mit dem Druckmittelkanal 27 zur Versorgung des Antriebes (15) mit einem Druckmittel zusammen.

Die Bewegungsrichtung B des beweglichen Elements 32 wird bei Konstruktion des Ventils 1 und der Ventilsteuereinrichtung 22 festgelegt. Sie kann beispielsweise gemäß Konstruktion senkrecht auf der durch den Ventilsitz 10 und/oder den Kupplungsflansch 24 hindurchgehenden Ebene stehen. Die Längsachse L des beweglichen Elements 32 und damit die Symmetrieachse der Resonanzwelle R werden konstruktiv mit der Bewegungsrichtung B zusammengelegt oder wenigstens parallel ausgelegt. Durch Bauteiltoleranzen oder Verschleiß kann die tatsächliche Bewegung gegen diese konstruktiv festgelegte, sozusagen geplante, Bewegungsrichtung B gekippt sein. Dies entspricht einem Winkel W, der sich zwischen der Längsachse L und der Bewegungsrichtung B einstellt. Dieser liegt typisch bei Werten von zwei Winkelgraden oder weniger. Sendeanordnung 35, Empfangsanordnung 37 und Messelektronik 38 sind so ausgelegt, dass die Ermittlung der Position des beweglichen Elements 32 auch bei einer Abweichung um den Winkel W erfolgt.

Alternativ zu der hier gezeigten Ausführung des Prozessventils 1 kann dieses eine andere Anzahl von Anschlüssen 3, 4, 5 und 6 aufweisen. Es kann neben der Absperrdichtung 12 weitere Dichtungen enthalten und als Doppelsitzventil ausgeführt sein und daher neben dem Absperrorgan 11 weitere Absperrmittel aufweisen. Weitere Ausführungsarten sind dem Fachmann geläufig, beispielsweise die Ausführung als Tankbodenventil.

### Bezugszeichenliste

- 1: Prozessventil
- 2: Ventilgehäuse
- 3: erster Anschluss
- 4: zweiter Anschluss
- 5: dritter Anschluss
- 6: vierter Anschluss
- 7: erste Kammer
- 8: zweite Kammer
- 9: Durchtrittsöffnung
- 10: Ventilsitz
- 11: Absperrorgan
- 12: Absperrdichtung
- 13: Antriebsstange
- 14: Durchführung
- 15: Antrieb
- 16: untere Antriebsdichtung
- 17: obere Antriebsdichtung
- 18: Kolben
- 19: Kolbendichtung
- 20: Feder
- 21: Druckraum
- 22: Ventilsteuereinrichtung
- 23: Antriebsflansch
- 24: Kupplungsflansch
- 25: Klemme
- 26: Flanschdichtung
- 27: Druckmittelkanal
- 28: Basis
- 29: Haube
- 30: Stangenende
- 31: becherförmiges Gehäuse
- 32: bewegliches Element
- 33: Steuerelektronik
- 34: Messsystem
- 35: Sendeanordnung
- 36: Resonator
- 37: Empfangsanordnung
- 38: Messelektronik
- 39: Messsystemgehäuse
- 40: Sicherungsmittel
- 41: Boden
- 42: Leuchtmittel
- 43: transparenter Gehäuseabschnitt
- 44: Messverbindung
- 45: Steuerventil
- 46: Schaltverbindung
- 47: Druckmittelversorgung
- 48: Durchlass
- 49: Durchgangsöffnung
- 50: Sendespule
- 51: erste Empfangsspule
- 52: zweite Empfangsspule
- 53a: Leiterschleife
- 53b: Leiterschleife
- 54a: Leiterschleife
- 54b: Leiterschleife
- 54c: Leiterschleife
- 55: Versorgungsschaltung
- 56: erste elektrische Verbindung
- 57: Steuerschaltung
- 58: zweite elektrische Verbindung
- 59: Kommunikationsschaltung
- 60: Kommunikationsverbindung
- 61: Speichermittel
- 62: Schraubverbindung
- 63: zylindrischer Fortsatz
- 64: Ausnehmung
- 65: Resonanzspule
- 66: Kondensator
- 67: Kapselung
- 68: zusätzliche Verbindung
- L: Längsachse
- B: Bewegungsrichtung
- R: Resonanzwelle
- W: Zwischenwinkel
- M: Messweg

## Patentansprüche

1. Ventilsteuereinrichtung für ein Prozessventil (1) mit einer Steuerelektronik (33) zur Ansteuerung eines Antriebes (15) und einem Messsystem (34) zur Bestimmung der Lage eines sich innerhalb der Ventilsteuereinrichtung (22) befindenden und darin entlang einer geradlinigen Bewegungsrichtung (B) beweglichen Elements (32), **dadurch gekennzeichnet, dass** das Messsystem (34) eine Sendeanordnung (35) zum Aussenden einer elektromagnetischen Anregungswelle, einen an dem beweglichen Element befestigten Resonator (36), in welchem von der Anregungswelle eine resonante elektrische Schwingung erzeugt wird, eine Empfangsanordnung (37), in welcher eine durch die resonante elektrische Schwingung erzeugte elektromagnetische Resonanzwelle (R) ein Signal erzeugt, und eine mit Sendeanordnung (35) und Empfangsanordnung (37) verbundene Messelektronik (38), welche zur Erzeugung der Anregungswelle in der Sendeanordnung (35) und zur Bestimmung der Lage des beweglichen Elements (32) relativ zur Empfangsanordnung (37) aus dem Signal der Empfangsanordnung (37) eingerichtet ist, umfasst, wobei der Resonator (36) derart gestaltet und angeordnet ist, dass die elektromagnetische Resonanzwelle (R) rotationssymmetrisch zu einer Längsachse (L) und die Längsachse (L) an der Bewegungsrichtung (B) ausgerichtet ist.

2. Ventilsteuereinrichtung für ein Prozessventil (1) nach Anspruch 1, **dadurch gekennzeichnet, dass** Sendeanordnung (35) und Empfangsanordnung (36) eben gestaltet und einen Messweg (M) abdeckend an der Bewegungsrichtung (B) ausgerichtet sind.

3. Ventilsteuereinrichtung für ein Prozessventil (1) nach einem der vorhergehenden Ansprüche, **dadurch gekennzeichnet, dass** eine erste elektrische Verbindung (56) und eine zweite elektrische Verbindung (58) zwischen Steuerelektronik (33) und Messelektronik (38) vorgesehen sind, wobei die erste Verbindung (56) zur Versorgung der Messelektronik (38) mit einer Betriebsspannung und die zweite elektrische Verbindung (58) zur Übermittelung eines Stellungssignals eingerichtet sind.

4. Ventilsteuereinrichtung für ein Prozessventil (1) nach einem der vorhergehenden Ansprüche, **dadurch gekennzeichnet, dass** die Sendeanordnung (35) eine elektrische Sendespule (50) und die Empfangsanordnung (37) eine elektrische Empfangsspule (51, 52) umfasst.

5. Ventilsteuereinrichtung für ein Prozessventil (1) nach Anspruch 4, **dadurch gekennzeichnet, dass** die Empfangsanordnung (37) eine erste Empfangsspule (51) und eine zweite Empfangsspule (52) umfasst.

6. Ventilsteuereinrichtung für ein Prozessventil (1) nach Anspruch 5, **dadurch gekennzeichnet, dass** erste Empfangsspule (51) und zweite Empfangsspule (52) so angeordnet sind, dass die Signale in erster und zweiter Empfangsspule (51, 52) phasenversetzt zueinander sind.

7. Ventilsteuereinrichtung für ein Prozessventil (1) nach einem der vorhergehenden Ansprüche, **dadurch gekennzeichnet, dass** der Resonator (36) einen elektrischen Schwingkreis (65, 66) umfasst.

8. Ventilsteuereinrichtung für ein Prozessventil (1) nach einem der vorhergehenden Ansprüche, **dadurch gekennzeichnet, dass** der Resonator (36) einen Schwingkreis (65, 66) mit einer Resonanzspule (65) umfasst, welche derart gestaltet und angeordnet ist, dass die elektromagnetische Resonanzwelle (R) rotationssymmetrisch zu einer Längsachse (L) und die Längsachse (L) an der Bewegungsrichtung (B) ausgerichtet ist.

9. Ventilsteuereinrichtung für ein Prozessventil (1) nach Anspruch 8, **dadurch gekennzeichnet, dass** die Resonanzspule (65) fluiddicht in einer Kapselung (67) eingeschlossen ist, und die Kapselung (67) eine zentrale Durchgangsöffnung (49) besitzt.

10. Ventilsteuereinrichtung für ein Prozessventil (1) nach Anspruch 9, **dadurch gekennzeichnet, dass** die Durchgangsöffnung (49) mit einem Druckmittelkanal (27) zur Versorgung des Antriebes (15) mit einem Druckmittel zusammenwirkend angeordnet ist.

11. Ventilsteuereinrichtung für ein Prozessventil (1) nach einem der vorhergehenden Ansprüche, **dadurch gekennzeichnet, dass** die Steuerelektronik (33) ein Leuchtmittel (42) umfasst, welches mit einem transparenten Gehäuseabschnitt (43) der Ventilsteuereinrichtung (22) als visuelles Anzeigemittel zusammenwirkt und/oder dass die Steuerelektronik (33) ein Speichermittel (61) zur Speicherung von Ventilparametern umfasst und/oder dass die Steuerelektronik (33) eine Kommunikationsschaltung (59) umfasst.

12. Anordnung mit einem Prozessventil (1), insbesondere der lebensmitteltechnischen oder pharmazeutischen Industrie sowie für die Biotechnologie, mit einer Durchtrittsöffnung (9) und einem Absperrorgan (11), mit welchen eine Sperrstellung und eine Durchlassstellung des Prozessventils (1) bewirkbar sind, einem Antrieb (15) zum Bewegen des Absperrorgans (11) zwischen Sperrstellung und Durchlassstellung und mit einer Ventilsteuereinrichtung (22) nach einem der vorhergehenden Ansprüche, **dadurch gekennzeichnet, dass** das Absperrorgan (11) mit dem beweglichen Element (32) der Ventilsteuereinrichtung (22) mittelbar oder unmittelbar verbunden ist.

13. Anordnung nach Anspruch 12, **dadurch gekennzeichnet, dass** der Antrieb (15) zwischen Prozessventil (1) und Ventilsteuereinrichtung (22) angeordnet und eine Antriebsstange (13) vorgesehen ist, welche den Antrieb (15) durchsetzt und mit dem Absperrorgan (11) und dem beweglichen Element (32) verbunden ist.

14. Anordnung nach Anspruch 13, **dadurch gekennzeichnet, dass** die Antriebsstange (13) einen Druckmittelkanal (27) umfasst, welcher an einem dem beweglichen Element (32) zugewandten Stangenende (30) beginnt und innerhalb des Antriebes (15) endet.

## Claims

1. A valve control apparatus (1) for a processing valve (1) comprising control electronics (33) for controlling a drive (15) and a measuring system (34) for determining the position of an element (32) which is located within the valve control apparatus (22) and can be moved in said apparatus along a straight movement direction (B), **characterized in that** the measuring system (34) comprises a transmission arrangement (35) for transmitting an electromagnetic excitation wave, a resonator (36) which is secured to the movable element and in which a resonant electric vibration is generated by the excitation wave, a receiving arrangement (37) in which a signal is generated by the electromagnetic resonant wave (R) generated by the resonant electric vibration, and measuring electronics (38) which are connected to the transmission arrangement (35) and the receiving arrangement (37) and which are designed to generate the excitation wave in the transmission arrangement (35) and determine the position of the movable element (32) relative to the receiving arrangement (37) from the signal of the receiving arrangement (37), wherein the resonator (36) is designed and arranged so that the electromagnetic resonance wave (R) is aligned to be rotationally symmetrical with a longitudinal axis (L), and the longitudinal axis (L) is aligned with the direction of movement (B).

2. The valve control apparatus for a processing valve according to claim 1, **characterized in that** the transmission arrangement (35) and receiving arrangement (36) are designed flat and aligned with the direction of movement (B) covering a measurement path (M).

3. The valve control apparatus for a processing valve (1) according to one of the proceeding claims, **characterized in that** a first electrical connection (56) and a second electronic connection (58) are provided between control electronics (33) and measuring electronics (38), wherein the first connection (56) is configured to supply the measuring electronics (38) with an operating voltage, and the second electrical connection (58) is configured to transmit a position signal.

4. The valve control apparatus for a processing valve (1) according to one of the preceding claims, **characterized in that** the transmission arrangement (35) comprises an electrical transmitter coil (50), and the receiving arrangement (37) comprises an electrical receiver coil (51, 52).

5. The valve control apparatus for a processing valve (1) according to claim 4, **characterized in that** the receiving arrangement (37) comprises a first receiver coil (51) and a second receiver coil (52).

6. The valve control apparatus for a processing valve (1) according to claim 5, **characterized in that** the first receiver coil (51) and second receiver coil (52) are arranged so that the signals in the first and second receiver coil (51, 52) are phase-shifted relative to each other.

7. The valve control apparatus for a processing valve (1) according to one of the preceding claims, **characterized in that** the resonator (36) comprises an electrical oscillating circuit (65, 66).

8. The valve control apparatus for a processing valve (1) according to claim 1, **characterized in that** the resonator (36) comprises an oscillating circuit (65, 66) with a resonance coil (65) that is designed and arranged so that the electromagnetic resonance wave (R) is aligned to be rotationally symmetrical with a longitudinal axis (L), and the longitudinal axis (L) is aligned with the direction of movement (B).

9. The valve control apparatus for a processing valve (one) according to claim 8, **characterized in that** the resonance coil (65) is enclosed fluid-tight in an encapsulation (67), and the encapsulation (67) possesses a central passage (49).

10. The valve control apparatus for a processing valve (1) according to claim 9, **characterized in that** the passage (49) with a pressurizing medium channel (27) for supplying a drive (15) is arranged to interact with a pressurizing medium.

11. The valve control apparatus for a processing valve (1) according to one of the preceding claims, **characterized in that** the control electronics (33) comprise an illuminant (42) which interacts with a transparent housing section (43) of the valve control apparatus (22) as a visual display means, and/or the control electronics (33) comprise a storage means (61) for storing valve parameters, and/or the control electronics (33) comprise a communication circuit (59).

12. An arrangement with a processing valve (1), in particular for the food industry or pharmaceutical industry as well as biotechnology, having a passage (9) and a shutoff device (11) by means of which a shut position and open position of the processing valve (1) can be effectuated, with a drive (15) for moving the shutoff device (11) between the shut position and open position, and with a valve control apparatus (22) according to one of the preceding claims, **characterized in that** the shutoff device (11) is indirectly or directly connected to the movable element (32) of a valve control apparatus (22).

13. The arrangement according to claim 12, **characterized in that** the drive (15) is provided between the processing valve (1) and valve control apparatus (22), and a drive rod (13) is provided which passes through the drive (15) and is connected to the shutoff device (11) and the movable element (32).

14. The arrangement according to claim 13, **characterized in that** the drive rod (13) comprises a pressurizing medium channel (27) that starts at a rod end (30) facing the movable element (32) and ends within the drive (15).

## Revendications

1. Dispositif de commande de soupape destiné à une soupape de processus (1) dotée d'une électronique de commande (33) pour actionner un entraînement (15) et d'un système de mesure (34) pour déterminer la position d'un élément (32) mobile à l'intérieur du dispositif de commande de soupape (22) et s'y déplaçant longitudinalement dans le sens d'un mouvement rectiligne (B), **caractérisé en ce que** le système de mesure (34) comprend un ensemble d'émission (35) servant à diffuser une onde d'excitation électromagnétique, un résonateur (36) fixé à l'élément mobile, dans lequel une vibration électrique résonante est produite par l'onde d'excitation, un ensemble de réception (37), dans lequel une onde de résonance (R) électromagnétique produite par la vibration électrique résonante génère un signal, et une électronique de mesure (38) reliée à l'ensemble d'émission (35) et à l'ensemble de réception (37), laquelle est ajustée pour produire l'onde d'excitation dans l'ensemble d'émission (35) et pour déterminer la position de l'élément mobile (32) par rapport à l'ensemble de réception (37), dans lequel le résonateur (36) est conçu et disposé de telle sorte que l'onde de résonance (R) électromagnétique est orientée avec une symétrie de révolution par rapport à un axe longitudinal (L) et l'axe longitudinal (L) est aligné sur la direction de déplacement (B).

2. Dispositif de commande de soupape destiné à une soupape de processus (1) selon la revendication 1, **caractérisé en ce que** l'ensemble d'émission (35) et l'ensemble de réception (36) sont alignés sur la direction de déplacement (B) en étant conçus de manière plane et en couvrant une trajectoire de mesure (M).

3. Dispositif de commande de soupape destiné à une soupape de processus (1) selon l'une des revendications précédentes, **caractérisé en ce qu'**une première connexion électrique (56) et une seconde connexion électrique (58) sont prévues entre l'électronique de commande (33) et l'électronique de mesure (38), dans lequel la première connexion électrique (56) est ajustée pour alimenter l'électronique de mesure (38) avec une tension de service et la seconde connexion électrique (58) pour transmettre un signal de position.

4. Dispositif de commande de soupape destiné à une soupape de processus (1) selon l'une des revendications précédentes, **caractérisé en ce que** l'ensemble d'émission (35) comprend une bobine émettrice électrique (50) et l'ensemble de réception (37) une bobine réceptrice électrique (51, 52).

5. Dispositif de commande de soupape destiné à une soupape de processus (1) selon la revendication 4, **caractérisé en ce que** l'ensemble de réception (37) comprend une première bobine réceptrice (51) et une seconde bobine réceptrice (52).

6. Dispositif de commande de soupape destiné à une soupape de processus (1) selon la revendication 5, **caractérisé en ce que** la première bobine réceptrice (51) et la seconde bobine réceptrice (52) sont disposées de manière à ce que les signaux reçus dans les première et seconde bobines réceptrices (51, 52) soient déphasés les uns par rapport aux autres.

7. Dispositif de commande de soupape destiné à une soupape de processus (1) selon l'une des revendications précédentes, **caractérisé en ce que** le résonateur (36) comprend un circuit oscillant électrique (65, 66).

8. Dispositif de commande de soupape destiné à une soupape de processus (1) selon l'une des revendications précédentes, **caractérisé en ce que** le résonateur (36) comprend un circuit oscillant (65, 66) doté d'une bobine de résonance (65), laquelle est conçue et disposée de telle sorte que l'onde de résonance (R) électromagnétique est orientée avec une symétrie de révolution par rapport à un axe longitudinal (L) et que l'axe longitudinal (L) est aligné sur la direction de déplacement (B).

9. Dispositif de commande de soupape destiné à une soupape de processus (1) selon la revendication 8, **caractérisé en ce que** la bobine de résonance (65) est enfermée dans une enveloppe (67) d'une manière étanche aux fluides et que l'enveloppe (67) possède une ouverture traversante centrale (49).

10. Dispositif de commande de soupape destiné à une soupape de processus (1) selon la revendication 9, **caractérisé en ce que** l'ouverture traversante (49) est disposée en coopération avec un canal de fluide sous pression (27) servant à alimenter l'entraînement (15) avec un fluide sous pression.

11. Dispositif de commande de soupape destiné à une soupape de processus (1) selon l'une des revendications précédentes, **caractérisé en ce que** l'électronique de commande (33) comprend une source lumineuse (42), laquelle interagit avec une partie de boîtier transparente (43) du dispositif de commande de soupape (22) sous la forme d'un moyen d'affichage visuel et/ou que l'électronique de commande (33) comprend un moyen de mémorisation (61) pour enregistrer les paramètres de la soupape et/ou que l'électronique de commande (33) comprend un circuit de communication (59).

12. Ensemble doté d'une soupape de processus (1), notamment de l'industrie du génie alimentaire ou pharmaceutique ainsi que de la biotechnologie, avec une ouverture de passage (9) et un organe d'arrêt (11), au moyen desquels une position de fermeture et une position d'ouverture de la soupape de processus (1) sont réalisables, avec un entraînement (15) servant à déplacer l'organe d'arrêt (11) entre la position de fermeture et la position d'ouverture, et avec un dispositif de commande de soupape (22) selon l'une des revendications précédentes, **caractérisé en ce que** l'organe d'arrêt (11) est relié directement ou indirectement à l'élément mobile (32) du dispositif de commande de soupape (22).

13. Ensemble selon la revendication 12, **caractérisé en ce que** l'entraînement (15) est disposé entre la soupape de processus (1) et le dispositif de commande de soupape (22) et qu'une tige d'actionnement (13) est prévue, laquelle traverse l'entraînement (15) et est reliée à l'organe d'arrêt (11) et à l'élément mobile (32).

14. Ensemble selon la revendication 13, **caractérisé en ce que** la tige d'actionnement (13) comprend un canal de fluide sous pression (27), lequel commence à une extrémité de la tige (30) tournée vers l'élément mobile (32) et aboutit à l'intérieur de l'entraînement (15).
